# EUROPEAN PATENT SPECIFICATION

(11) **EP 2 818 041 B1**
(45) Date of publication and mention of the grant of the patent: **29.05.2019**
(21) Application number: 14174245.2
(22) Date of filing: 26.06.2014
(51) Int. Cl.: A01G 25/02, A01G 25/16

(54) **Drip irrigator and irrigation system comprising the same**
Tropfenbewässerer und Bewässerungssystem damit
Dispositif d'irrigation au goutte-à-goutte et système d'irrigation le comprenant

(30) Priority: 27.06.2013 IL 22722713
(43) Date of publication of application: 31.12.2014
(73) Proprietor: Levy, Ido, 7194600 Bruchin (IL); Levy, Ofer, 42376 Natanya (IL)
(72) Inventor: Levy, Ido, 7194600 Bruchin (IL); Levy, Ofer, 42376 Natanya (IL)
(74) Representative: Lecomte & Partners

(56) References cited:
- EP-A1- 1 103 178
- US-A1- 2004 222 325

## Description

### TECHNOLOGICAL FIELD

The subject matter of the present application relates to controlled drip irrigators and irrigation systems using the same.

### BACKGROUND

It is well know in the field of irrigation to provide a plurality of irrigation elements (drip irrigators, sprinklers etc.) in order to cover a predetermined area required to be irrigated.

The plurality of irrigation elements is usually spread over the above area in a predetermined array calculated and configured for providing the required amount of irrigation (usually uniform) throughout the covered area.

It is also know to provide sensors configured for gathering data regarding the irrigated area such as moisture, precipitation rate etc. and for providing such data to a designated controller which is, in turn, responsible for utilizing the data in order to optimize and improve irrigation parameters.

Patent document published US 2004/0222325 A1 discloses a communicable drip irrigator comprising an electrically controlled water valve for enabling or stopping a flow of water. The drip irrigator comprises also a micro controller that is configured for communicating with a system master control via a communication network and for remotely controlling the water valve.

Acknowledgement of the above references herein is not to be inferred as meaning that these are in any way relevant to the patentability of the presently disclosed subject matter.

### GENERAL DESCRIPTION

In accordance with the present invention there is provided a communicable drip irrigator comprising:
- a housing formed with a fluid inlet for receiving irrigation fluid and a fluid outlet for emitting said irrigation fluid;
- a flow meter associated with at least one of said fluid inlet and said fluid outlet and configured for providing flow data indicative of parameters of the flow passing within the dripper; and
- a communication unit associated with the flow meter and configured for providing to a controller, data regarding operation of the drip irrigator, said data including at least the flow data.

In other words, the flow meter is uniquely associated with the specific drip irrigator and configured for measuring flow-rate/amount therein rather than flow rate within the manifold containing other drippers in addition to said drip irrigator.

In another variation not part of the present invention, communication of data concerning current operative state of the drip irrigator is provided by electric communication of the drip irrigator with the communication unit, an indicator or several indicators. Thus, for example, a certain electric circle is closed or opened in respect with the open and closed states of the regulator in the drip irrigator, thereby indicating proper operative states. Additional electric circles may further communicate with the drip irrigator, in particular with the regulator, and activated in response to different operative states. Examples of such states may be malfunction in the regulator, streaming fluid through the drip irrigator, fluid buildup, broken valves and so on. The communication unit or indicators will then receive electric signal and respond in an alarm signal. Such alarm signal may be a notice on the display screen of the communication unit, audio alarm or visual alarm such as a light bulb with particular color for each state or problem identified.

According to one example, the flow meter can be external to the housing of the drip irrigator and be immediately associated with either of said fluid inlet and said fluid outlet, thereby providing accurate indication of the amount/flow-rate of irrigation fluid entering the fluid inlet and/or emitted through the fluid outlet.

Alternatively, the flow meter can be received within the housing of the drip-irrigator between the fluid inlet and the fluid outlet, thereby providing accurate indication of the amount/flow-rate of irrigation fluid passed between the fluid inlet and the fluid outlet.

The flow meter can be configured for providing an output signal carrying the flow data of its flow-rate/amount measurements and for providing said output signal to the communication unit of the drip irrigator, which, in turn, provides the same to the controller.

The communication unit can constitute a part of a local control module which can, in turn, comprise additional components, such as a processing unit and a control unit which will be discussed in detail later.

The communication unit can also be configured for obtaining operational data regarding the operative condition of the drip irrigator itself from a source other than the flow meter, and outputting said operational data to the controller. Such operational data can include, for example, verification regarding operation of the drip irrigator, data regarding leaks, dryness, operation of the regulation mechanism, malfunction etc.

The operational data can be obtained either by local sensors associated with the drip irrigator or by local processing of the flow data performed by a processing unit comprised within the local control module.

The drip irrigator can also comprise a regulation mechanism associated with the fluid path between the fluid inlet and the fluid outlet and configured for regulating flow therein of said irrigation fluid. The local control module can comprise a control unit associated with the regulation mechanism of the drip irrigator and with the controller, and configured for receiving control input from the controller to thereby control the regulation mechanism based on said control input.

In particular, the control unit can be configured for receiving control input from the controller and transferring a corresponding control signal based thereon to the regulation mechanism.

In particular, based on the operational data provided by the communication unit of the local control module as feedback, the controller can be configured for outputting a control input to the control unit of the local control module with instructions for regulating the operation of the drip irrigator. Specifically, the control unit can be configured, based on such instructions, to control the regulation mechanism to begin operation, reduce/increase flow rate, shut down operation of the controlled drip irrigator and/or outputting an alert to a user of the system.

The controller can be an external controller, located outside the drip irrigator. According to one example, the controller can be in the form of a mainframe controller or central controller associated with a plurality of control modules. In this respect, it should be hereinafter understood that the terms 'central controller' and 'mainframe controller' can be used interchangeably. Alternatively, the controller can be in the form of an external controller associated with the local control module of only one drip irrigator.

According to another example, the controller can be located inside the housing of the drip irrigator and be integrated therewith, as will be explained in detail later.

In accordance with the above arrangement, in a system comprising a plurality of such drip irrigators, it is possible for an operator of the system to receive data regarding the amount/flow rate of irrigation fluid passing through each of the drip irrigators, and consequently controlling operation of each of the drip irrigators in accordance with desired irrigation parameters for a specific environment.

Accordingly, each one of the drip irrigators in a system that comprises a plurality of drip irrigators can be individually controlled with a single or plurality of control modules, thereby enabling the regulation of the amount or flow rate through them independently of each other.

According to another variation of the subject matter of the present application, control of the pressure within a specific drip irrigator can be performed by controlling (closing/opening) of other drip irrigators located along the same distribution line as the specific drip irrigator.

In particular, in order to increase pressure within the drip irrigator, some or all of the other drip irrigators can be closed, thereby causing all the fluid within the distribution line to pass through the specific drip irrigator, consequently yielding a rise in pressure. Similarly, in order to decrease pressure within the drip irrigator, some or all of the other drip irrigators can be opened, thereby causing the majority of the fluid within the distribution line to pass through drip irrigators other than the specific drip irrigator, consequently yielding a fall in pressure.

In general, a method of controlling pressure under the above variation can include the following steps of operation (defined for a distribution line having ***n*** drippers thereon):
Reset phase - the controller verifies that all ***n*** drip irrigators along the distribution line are functional;
Configuration phase - gradual opening of drip irrigators while gathering flow data from each of the drip irrigators, until receiving indication that the flow data of one of the drip irrigators does not meet a predetermined requirement. An this point, ***m*** drip irrigators can be 'open', where ***m*** ≤ ***n**.* Opening of the drip irrigators can be performed sequentially, for example, starting from the first drip irrigator on the line and onwards (second, third, forth and so on).;
Main phase - closing off some of the ***m*** 'open' drip irrigators and opening previously 'closed' drip irrigators along the line, all the while maintaining a number ***m*** of 'open' drip irrigators, until all drip irrigators along the distribution line have been utilized. At this stage, it is appreciated that flow data is still collected and therefore, if the predetermined requirements are not met at any stage, additional drip irrigators can be closed/opened to meet such requirement, thereby changing the value of ***m***;
Finish phase - the controller ceases to open/close drip irrigators and irrigation continues with those drip irrigators which remained open at the end of the main phase until irrigation is complete; and
Report phase - the controller receives flow data from each of the drip irrigators and verifies that all meet predetermined requirements and that all are working properly. For example, in a manifold comprising a plurality of such drip irrigator and passing through two irrigation regions, each having different irrigation requirements, central operating entity or an operator can be able to control, individually, each of the drip irrigators and determine, for example, any of the following:
   - for drip irrigators A₁ to A₃ passing through irrigation region 1, or even simply associated with a specific plant/tree, if the amount of irrigation fluid passed through any of the drip irrigators within a specific time frame exceeds an amount Mi, shut down the respective drip irrigator, whereas for drip irrigators A₄ to A₆ passing through irrigation region 2, if the amount of irrigation fluid passed through any of the drip irrigators within one hour exceeds an amount M₂, shut down the respective drip irrigator;
   - if any of the regions requires a predetermined amount of irrigation fluid within a specific time frame, and the flow meter indicates that such an amount will not be provided, the controller can increase the flow rate through the drip irrigators. Alternatively, if flow meter indicates that such an amount will be exceeded, the controller can decrease the flow rate through the drip irrigators.
   - if indication is provided that one of the drip irrigators malfunctions or is out of order, the controller can be configured for compensating for such a malfunction by increasing the flow-rate through the remaining drip irrigators.

The above arrangement allows optimizing the flexibility of the control over an irrigation system and/or manifold comprising such drip irrigators, by providing individual control over each drip irrigator as well as an individual indication of the flow-rate through each drip irrigator.

It is important to note that, though the use of flow meters is known in conventional irrigation systems, it is usually in the form of a main flow meter located along the main manifold and the flow rate through each of the drip irrigators along the manifold is calculated or assumed based on the measurements of the main flow meter. Contrary thereto, the present subject matter allows accurately measuring the flow rate/amount through each of the drip irrigators and selectively adjusting operation of the drippers in the system/manifold accordingly.

In accordance with one aspect of the subject matter of the present application there is provided an individually controlled drip irrigator:
- a housing formed with a fluid inlet for receiving irrigation fluid and a fluid outlet for emitting said irrigation fluid, and a fluid path extending therebetween;
- a regulation mechanism associated with the fluid inlet, the fluid outlet and/or the fluid path and configured for regulating flow of said irrigation fluid at least through said fluid outlet; and
- a control unit associated with said regulation mechanism and configured for receiving control input and applying it to said regulation mechanism, to thereby control irrigation fluid flow.

In effect, the control unit can constitute a part of a local control module, and can be configured to control the regulation mechanism of the controlled drip irrigator to perform at least one of the following: begin operation, maintain its operation, increase/decrease the flow rate of irrigation fluid emitted from the drip irrigator and stop irrigation completely.

The controlled drip irrigator can be integrally formed or assembled with the control unit. Alternatively, an existing non-controlled drip irrigator can be converted into the controlled drip irrigator by providing it with a regulation mechanism and a local control module.

In accordance with one example, the controlled drip irrigator can be a directional drip irrigator, in which case the control unit can also be effective in providing variable direction of the emission of irrigation fluid from the drip irrigator.

According to another example, the controlled drip irrigator can be configured for being an internally integrated within, or externally mounted to an irrigation pipe to constitute an irrigation line.

In accordance with another aspect of the subject matter of the present application, there is provided an irrigation system comprising:
- a plurality of drip irrigators, in accordance with any previous aspect of the presently disclosed subject matter; and
- a controller associated with the plurality of said drip irrigators and configured for individually controlling each of said plurality of drip irrigators via corresponding local control modules of said drip irrigators to meet predetermined irrigation requirements.

The irrigation system can further comprise a sensing arrangement comprising a plurality of sensors configured for being disposed across an area to be irrigated and configured for obtaining data from said area relevant to its irrigation and providing said data to said controller.

Based on said data, the controller can be configured for determining irrigation requirements for said area and control the plurality of drip irrigators in accordance with these requirements.

The sensing arrangement can be configured for measuring at least any of the followings:
- moisture;
- heat;
- soil composition; or
- light conditions.

In accordance with the above, the sensors can be moisture sensors, heat sensors, chemical analysis sensors, radiation sensors, etc. According to a particular example, the sensor can even be an image capture device configured for taking an image of at least one detail within said area.

Each sensor can be associated with a particular drip irrigator and/or a particular group of drip irrigators. According to a particular design, the one or more of the sensors of the sensing system can be attached to or integrated with one or more of the drip irrigators.

Alternatively, the sensors can be positioned within the irrigated area without association to the drip irrigators, wherein the controller is configured for obtaining relevant data from the sensing system, process said data and thereafter determine which of the drip irrigators to operate based on said data.

According to a particular design, the sensors can be designed to mimic elements in the irrigated area, e.g. to be made looking like plants, insects etc.

The association between the controller and drip irrigators and/or sensing arrangement can be by remote or non-remote control means. In particular non-limiting examples remote control can be established with wireless connection and non-remote control can be established with physical wired connection. However, other types of remote control are contemplated within the scope of the present invention. One non-limiting example is a controller that is wire-connected to the drip irrigators and/or sensing arrangement. Another non-limiting example is a controller with IR (Infra Red) communication with a receiver in the drip irrigator, which requires a direct line of sight between them. Therefore, remote control is not to be solely construed as wireless connection. Rather it refers to control on the drip irrigators and sensing arrangement from a distance with appropriate configuration of signal transmission means between the drip irrigators and/or sensing arrangement and the control module.

The association between the controller and sensing arrangement can be provided by a physical wire connection between the different elements of the system. In this case, the wiring can be configured for being isolated and protected from moisture or wet environment.

Alternatively, the controller can be configured for a wireless connection with sensing arrangement, thereby simplifying operation and physical management of the system.

The types of communication mentioned above can also be used for communication between the controlled irrigation drippers and the controller.

The controller can comprise a database unit configured for storing at least one set of desired area parameters. Specifically, the database unit can store a plurality of such sets, each being suitable for a different situation (e.g. seasons of the year), different plants, different regions of the world etc. The area parameters can also be inputted manually by an individual according to his/hers desired irrigation needs.

The controller can also comprise a processor effective for:
- receiving the data gathered by the sensors regarding the irrigated area;
- comparing it with the operative set of area parameters; and, if so required
- providing a control input to the control modules of the individual drip irrigators to control their irrigation regulation mechanism drip irrigator until said data matches the required area parameters.

The processor can be configured for translating the data received from the sensors into parameters that can be matched with the area parameters on record in the database.

In particular, in case of an image capture sensor, the processor can be equipped with an image analysis software configured for analyzing the image captured by the sensor, calculating area parameters based on said analysis and only thereafter comparing them with those on record.

For example, such software can analyze the color of a surface of the irrigated area and determine if it requires more/less irrigation. Furthermore, such software can be configured for analyzing the color/pattern of predetermined plants within the irrigated area and determine the same. In this case, it can also be effective for identifying possible plant disease and providing a proper indication to the user of the system.

In addition, the image analysis software can be effective in identifying any unwanted bugs/pests within the irrigated area and based on such data, determine if any change in the irrigation or maybe even an additional treatment to the area (e.g. alert the user that additional fertilizers are required) should be performed.

The irrigation system can further be provided with at least one power source configured for providing power to any of the components of the system including (but not limited to) the controller, the sensing arrangement, the control modules, the regulation mechanisms and flow meters of the drip irrigators.

It is appreciated that the irrigation system can be fitted with additional non-controlled drip irrigators which do not comprise a regulation mechanism. However, such drip irrigators can still comprise a flow meter unit and/or a sensing arrangement and/or a communication module associated with the controller for the purpose of identification and calculation of respective operational or area parameters.

The controller can be associated with a user interface via which an operator can control and regulate the operation of the irrigation system. For example, such an interface may be a control panel accessible to the user.

In accordance with a particular design, the controller can also be configured for transmitting its data to allow a user to access it from a portable device such as a cellular phone, PDA, table etc. In addition, the controller can be associated with a wireless home network and computers to allow users easier control over the system.

Some particular features can stem from the use of a digital control interface over an irrigation system, for example:
- **verification** - the system can be encoded to receive instruction only from specific users;
- **identification** - the encoding can be such that the controller can only control drip irrigators of its own system (and not some neighboring system);
- **customization** - the controller can be provided with a desired monthly water budget and be configured for monitoring irrigation to remain within the budget limit;
- **parcelation** - the irrigated area can be divided into virtual zones, each being controlled individually by the user. The parcelation can be such that the area is divided not only into zones but also to specific plants/trees/flowers etc.;
- **monitoring** - on-line live monitoring of the irrigated area can be provided, including pop-up notifications regarding dried plants, lack of irrigation, malfunctions etc.

In operation, when the irrigation system is 'started-up', the control module can be configured first to verify that all the drip irrigators of the system are operating properly and that there are no malfunctions.

In addition, the controller can be configured for providing each of the drip irrigators with an ID. Thus, if a unit is added or removed from the irrigation array, the control module can take that addition/subtraction of drip irrigators into calculation when determining the required irrigation of the area.

According to a particular example, one or more of the control modules of the drip irrigators can be provided with a processor configured to perform at least some of the functions of the controller described above, thereby constituting a local controller. In particular, some of the irrigation data can be stored on the control module itself, allowing the drip irrigator to operate almost independently.

In addition, according to a specific example of the above, those control modules fitted with such a processor can be arranged in a linked-list configuration, i.e. each control module can be associated with at least one other control module so as to form a communication net between the modules. Such a configuration cam allow for a simplified control configuration in which the controller is only configured for communication with some of the control modules (as the rest of the communication is performed between the modules themselves).

It is important to note that under the above configuration, as well as in other configurations, the definition of an 'external controller' may also be interpreted to refer to a controller and/or processor located in a control module external to a given control module, and not necessarily a main controller.

In a simplified example, each control module can be associated with its neighboring upstream and downstream module and transmit/receive data thereto/from. However, other configurations may be contemplated in which one or more of the modules are each connected to one or more other modules.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
**Fig. 1** is a schematic top view of an irrigation system deployed over an area to be irrigated;
**Fig. 2A** is a schematic cross-section view of one example of a drip irrigator according to the present application;
**Fig. 2B** is a schematic cross-section view of another example of a drip irrigator according to the present application;
**Fig. 3** is a schematic cross-section view of another example of a drip irrigator according to the present application; and
**Fig. 4** is a schematic view of a distribution line in which a method of the present application is implemented.

### DETAILED DESCRIPTION OF EMBODIMENTS

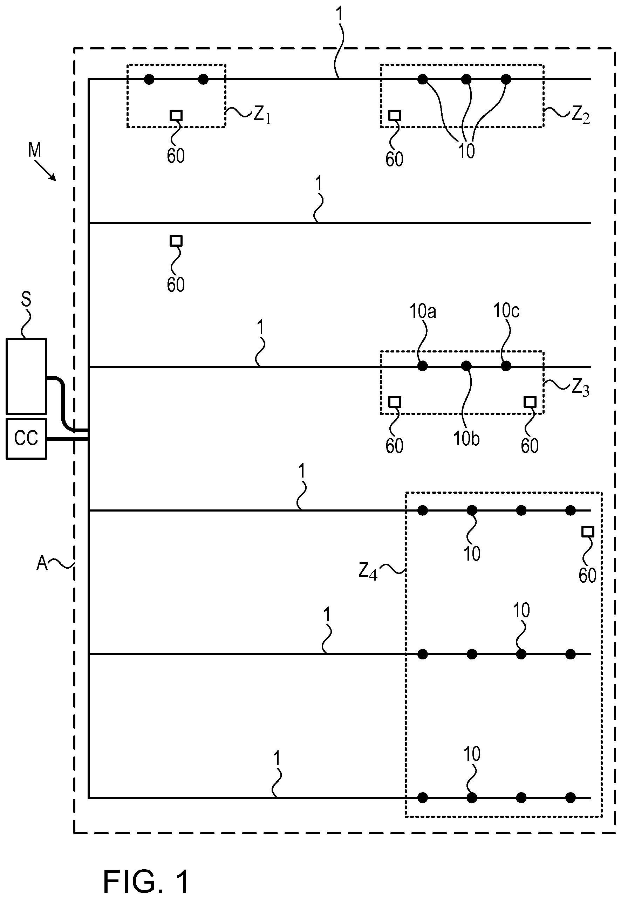

Attention is first drawn to Fig. 1 in which an irrigation system is shown comprising a manifold M deployed across an area A to be irrigated. The manifold M includes a plurality of irrigation pipes 1. Each of the irrigation pipes 1 is fitted therein with a plurality of drip irrigators 10 disposed along the pipe 1. The manifold M is associated with a source S providing it with the required irrigation fluid.

It is also noted that the area to be irrigated area A includes different irrigation zones Z1, Z2 etc., each having different irrigation requirements. For example, zone Z1 can be a flower patch while zone Z3 is just a lawn of grass.

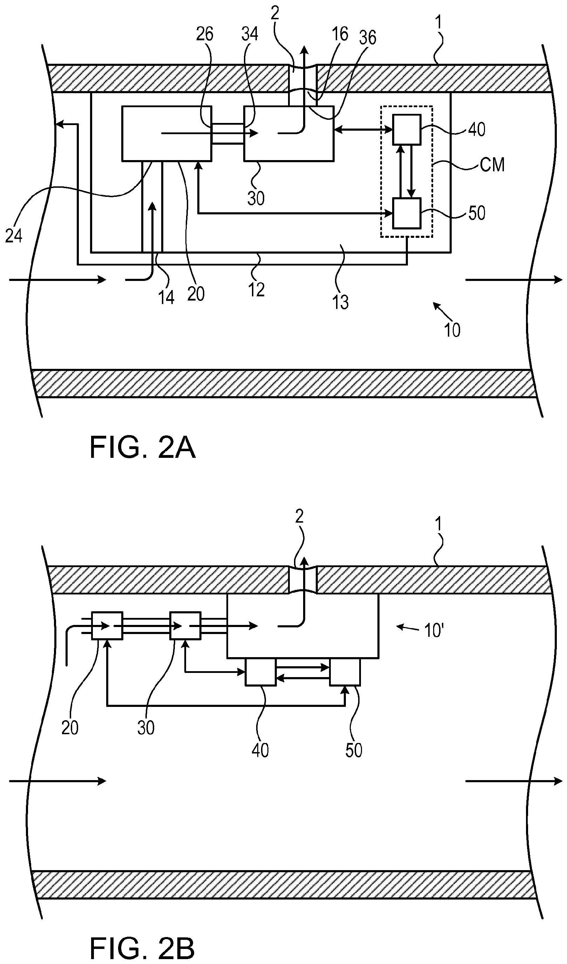

Attention is now drawn to Fig. 2A in which one example of a drip irrigator is shown generally designated 10 and positioned within a pipe 1. The pipe 1 is formed with a plurality of holes 2, one of which is shown to be in association with the drip irrigator 10.

The drip irrigator 10 comprises a housing 12 with an inner cavity 13 configured for accommodating a plurality of components which will further be detailed. The housing 12 has an inlet 14 configured for allowing inlet opened to the inner space of the pipe 1 and a fluid outlet associated with the hole 2 formed in the pipe 10. Thus, in operation, irrigation fluid passing through the pipe 10 enters the housing 12 through the inlet 14 and is emitted therefrom through the outlet 16 and consequently to the outside the pipe through hole 2.

The drip irrigator 10 comprises a flow meter 20, a regulation mechanism 30, and a control module CM including a control unit 40 associated with the regulation mechanism 30 and a communication unit 50 associated with the flow meter 20. The control module CM is associated with a central controller CC (shown in Fig. 1) via an appropriate cable (though under other configurations the communication is implemented in a wireless manner).

The flow meter 20 is formed with a fluid inlet 24 associated with the inlet 14 of the housing 12 of the drip irrigator 10 and an outlet 26. The regulation mechanism 30, is correspondingly formed with a fluid inlet 34 associated with the fluid outlet 26 of the flow meter 20 and a fluid outlet 36 associated with a fluid outlet 16 of the housing 12.

Thus, in operation, irrigation fluid enters the housing 12 through the inlet 14, passes through the flow meter 20, emitted therefrom to pass through the regulation mechanism 30 and is them emitted therefrom to the outside through the outlet 16 of the housing 12.

The communication unit 50 is configured for receiving data from the regulation mechanism and providing the data to the central controller CC via the communication cable. The information provided back to the central controller CC can include not only the measurements taken by the flow meter 20 but also data regarding operation of the drip irrigator 10, possible malfunctions etc. which can only be detected from the drip irrigator itself and not based on an analysis of fluid flow from the flow meter therein.

The control unit 40 is configured for receiving instructions from the central controller CC and based thereon, to operate the regulation mechanism 30. The control unit 40 can be effective in controlling the regulation mechanism to open/close the outlet 36 to passage of irrigation fluid and reduce/increase pressure and flow rate therethrough.

The central controller CC comprises a database (not shown) including data regarding all the required irrigation parameters for each of the zones. Thus, in operation, data is received at the central controller CC from the communication units 50 of each of the drip irrigators 10, compared to the irrigation data stored in the database. Based on the above comparison, output data is provided by the central controller CC to each of the control units 40 of the drip irrigators 10 to regulate the flow to adjust irrigation parameters to match those of the database.

With reference to the above, the process takes place continuously so that irrigation in each of the zones is constantly adjusted to match the required irrigation parameters.
For example, drip irrigators 10a, 10b, 10c are located in irrigation zone Z3. The requirement defined in the database is that the amount of irrigation fluid passed through any of the drip irrigators 10a, 10b, 10c within a specific time frame should not exceeds amounts M₁ M₂ and M₃ respectively.

Therefore, if, based on the data received at the central controller CC from the communication unit 50, the amount reaches M₁, the central controller CC can issue a command to the control unit 40 to operate the regulation mechanism to shut down the respective drip irrigator (i.e. block the outlet thereof), whereas the other drip irrigators can continue normal operation.

According to another example, if any of the zones require a predetermined amount of irrigation fluid within a specific time frame, and the flow meter indicates that such an amount will not be provided, the central controller CC can increase the flow rate through the drip irrigators. Alternatively, if flow meter indicates that such an amount will be exceeded (or nearing so), the central controller CC can decrease the flow rate through the drip irrigators.

In addition, if indication is provided that one of the drip irrigators malfunctions or is out of order, the controller can be configured for compensating for such a malfunction by increasing the flow-rate through the remaining drip irrigators.

In addition, the irrigation system can comprise a sensing system comprising a plurality of sensors 60 disposed across the areas to be irrigated. The sensors 60 can be associated with the central controller CC and provide additional information regarding the condition of the irrigated zones.

The sensors 60 of the sensing system can be of various types e.g. moisture, heat, soil composition and light. The central controller CC can therefore obtain additional data regarding the zones and correspondingly issue appropriate commands to the proper drip irrigators 10.

For example, if the sensors 60 show that the zone 2 requires additional irrigation (either the moisture levels are low, the soil composition changes, the temperature increases or even the color of the grass is not green enough), it can issue a command to the drip irrigators 10 of zone Z2 to increase the flow rate therethrough to provide required results.

Further attentions is now drawn to Fig. 2B in which another example of a drip irrigator is shown, generally designated 10', which is generally similar to the drip irrigator 10' previously shown with the only difference being in that the components are not accommodated within the housing 12' but rather outside it.
In particular, the flow meter 20 and regulation mechanism 30 are attached, in line with the drip irrigator 10' and the control unit 40 and communication unit 50 are also external to the drip irrigator 10'.

Under the above arrangement, the inlet 24 of the flow meter 20 is open to the pipe 1, its outlet 26 is associated with the inlet 34 of the regulation mechanism 30 and the outlet 36 of the regulation mechanism is associated with the inlet 14' of the housing 12' of the drip irrigator 10'. In all other aspects, the operation is similar.
However, with respect to the above it is appreciated that it is possible to modify a regular drip irrigator into a controlled drip irrigator 10' by simply providing it with the four components 20, 30, 40 and 50.

It is also noted that other arrangements can be contemplated under which the regulation mechanism 30 is located between the housing 12 and the opening 2, or any other possible combination.

In addition, the flow meter 20 is not limited to being located upstream from the regulation mechanism 30 but can also be disposed downstream therefrom. In some aspects, this can be even more advantageous as the flow meter 20 can provide an immediate confirmation and assessment on the operation of the regulation mechanism 30.

The central controller CC can be provided with a user interface configured for alerting an operator regarding the irrigation conditions, the state of each of the zones, the ability to manually change irrigation setting etc. The arrangement can even be such that the central controller CC and user interface are disposed at a location remote from the irrigated area A.

Furthermore, according to a particular example, a user interface application can be provided to a portable device (smartphone, pad, PDA etc.) through which the operator can control irrigation of the area A even without being present on site.

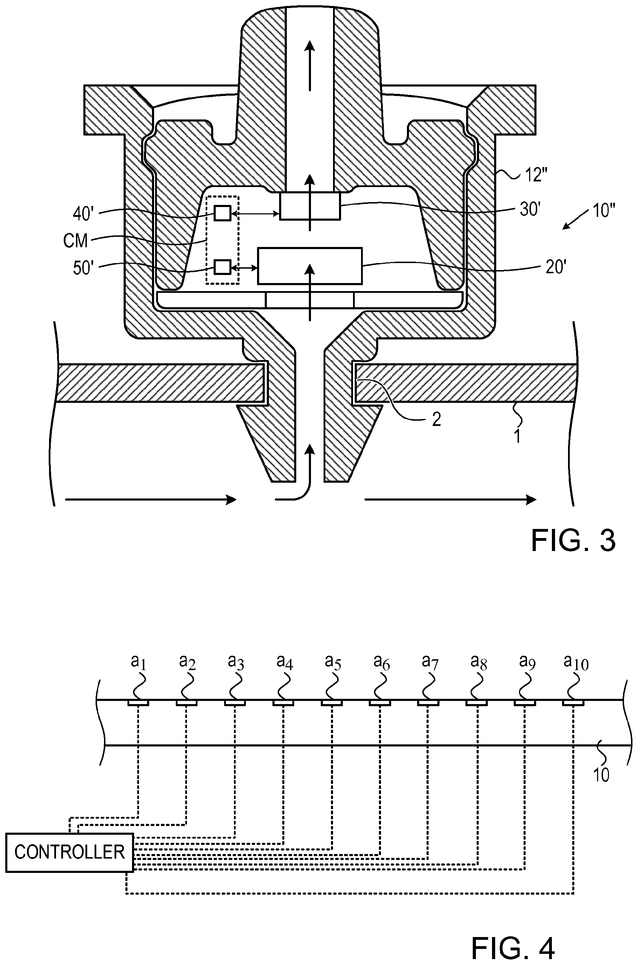

Turning now to Fig. 3, a similar arrangement comprising an external dripper generally designated as 10' and comprising a flow meter 20', a regulation mechanism 30' and a communication module CM comprising a communication unit 50' and regulation unit 40'.

In essence, the dripper 10' operates in a manner similar to that previously described with respect to the drip irrigator 10, with the only different lying in the manner of attachment of the dripper to the pipe 1 (external rather than internal).

Turning now to Fig. 4, a distribution line is shown comprising 10 drip irrigators, designated a₁ to a₁₀.

In standard operation of the above system, a predetermined pressure requirement can be set which should be met by each open drip irrigator. From an initial position in which the drip irrigators are all in a closed state, a command is given to sequentially open them, starting from dripper a₁.

With each further drip irrigator being opened, the controller gathers flow data and checks that the pressure requirement is met. If, for example, once drip irrigator a₅ is opened (when drips a₁ to a₄ are also open) the pressure drops below the requirement, the controller is configured to close off drip a₅, and thus the value ***m*** of open drip irrigators is set to 4.

Thereafter, the controller will give a command to close off drip irrigator a₁ and open a₅, maintaining 4 drip irrigators active. Thereafter, the controller will give a command to close off drip irrigator a₂ and open a₆, and so forth until all drip irrigators have been activated.

It should be noted that flow data is collected constantly and, if at any given moment the pressure requirement is not met, the controller can give a signal to close an additional drip irrigator, thereby changing the value of active drip irrigators ***m*** from 4 to 3 and so forth.

The controller can also determined various pressure requirements for different irrigators. For example, it is required to lower the pressure within drip irrigator No. 9 to a pressure P', drip irrigators 5-8 are gradually opened (one by one), thereby yielding the required drop in pressure. For further reduction of the pressure, all drip irrigators No. 1 through 8 can be opened, yielding a further decrease.

To the contrary, if it is required to raise the pressure within drip irrigator No. 9, it is possible to cut-off irrigators No. 1 through 4 (at the beginning of the line) and 10 (nearest drip No. 9), thereby yielding an increase in pressure.

In general, when a command is given for a certain drip irrigator to meet a certain pressure requirement, the processor is configured to calculate how many drip irrigators should be opened/closed and for how long in order to arrive at the desired pressure, and the extent of opening/closing.

Specifically, if it is required to provide a pressure P1 in drip No. 9 and a pressure P2 in drip No. 3, the controller will perform opening/closing of the other drippers simultaneously. However, if it is impossible to meet such a requirement (e.g. impossible to reach P1 in drip No. 9), then this task will be postponed and the controller will effectively generate a pressure P2 in drip No. 3.

When No. 3 has been opened for a sufficient amount of time to fulfill its original irrigation requirements, the controller can re-prioritize and move on to create a pressure P1 in drip No. 9, which may require closing off No. 3 (which is no longer needed as it finished its task).

Those skilled in the art to which this invention pertains will readily appreciate that numerous changes, variations, and modifications can be made without departing from the scope of the invention, as defined by the appended claims.

## Claims

1. A communicable drip irrigator (10) comprising:
- a housing (12) formed with a fluid inlet (14) for receiving irrigation fluid and a fluid outlet (16) for emitting said irrigation fluid;
**characterized in that** it further comprises
- a flow meter (20) associated with at least one of said fluid inlet (14) and said fluid outlet (16), configured for obtaining flow data; and
- a communication unit (50) associated with the flow meter (20) and configured for providing to a controller (CC), data regarding operation of the drip irrigator, said data including at least the flow data

2. A drip irrigator (10) according to Claim 1, wherein the flow meter is configured for measuring flow-rate and/or amount of irrigation fluid passed individually through said drip irrigator.

3. A drip irrigator (10) according to Claim 1 or 2, wherein the flow meter (20) is configured for providing an output signal carrying flow data and for providing said output signal to the communication unit (50).

4. A drip irrigator (10) according to Claim 1 or 2, wherein the communication unit (50) constitutes part of a local control module (CM), said local control module (CM) is configured for remote connection.

5. A drip irrigator (10) according to Claim 4, wherein said remote connection is selected from wireless communication, physical wire communication and IR communication with a plurality of drip irrigators and sensing arrangement.

6. A drip irrigator (10) according to any one of Claims 1 to 5, wherein the communication unit (50) is also configured for obtaining operational data regarding the operative condition of the drip irrigator itself from a source other than the flow meter (20) and outputting said operational data to the controller, said operation data includes at least one of the following: verification regarding operation of the drip irrigator, data regarding leaks, dryness, operation of a regulation mechanism of the drip irrigator and malfunction.

7. A drip irrigator (10) according to any one of Claims 1 to 6, wherein the drip irrigator comprises a regulation mechanism (30) associated with a fluid path between the fluid inlet (14) and the fluid outlet (16) and configured for regulating flow therein of said irrigation fluid.

8. A drip irrigator (10) according to Claim 7, wherein the drip irrigator comprises a control unit (40), also constituting a part of a local control module (CM), and associated with the regulation mechanism (30) and configured at least for transferring a control signal to the regulation mechanism (30) in order to operate it.

9. A drip irrigator (10) according to Claim 8, wherein the controller (CC) is configured for outputting a control signal to the control unit (40) of the local control module (CM) with instructions for regulating the operation of the drip irrigator (10) based on the operational data provided by the communication unit (50) of the local control module (CM).

10. A drip irrigator (10) according to Claim 9, wherein the control unit (40) is configured to control the regulation mechanism (30) to perform at least one of the following: begin operation, reduce/increase flow rate, shut down operation of the controlled drip irrigator and outputting an alert to a user of the system.

11. An irrigation system comprising:
- a plurality of individually controlled drip irrigators (10) according to any one of claims 1 to 10; and
- a controller (CC) associated with the plurality of said drip irrigators (10) and configured for individually controlling each of said plurality of drip irrigators via corresponding local control modules (CM) of said drip irrigators (10) to meet predetermined irrigation requirements.

12. An irrigation system according to Claim 11, wherein the controller (CC) is configured for controlling the pressure within each of the drip irrigators (10) by increasing/decreasing fluid flow through the other drip irrigators (10).

13. An irrigation system according to claim 11 or 12, wherein the local control modules (CM) of different drip irrigators (10) are associated with one another to transmit/receive data therebetween.

14. An irrigation system according to Claim 13, wherein the local control modules (CM) are associated with one another in a linked-list configuration in which each local control module is associated with its neighboring upstream and downstream local control modules.

## Patentansprüche

1. Ein kommunikabler Tropfenbewässerer (10) umfassend:
- ein Gehäuse gebildet mit einem Flüssigkeitseinlass (14) zum Empfangen von Bewässerungsflüssigkeit und einem Flüssigkeitsauslass (16) zum Emittieren der besagten Bewässerungsflüssigkeit;
**gekennzeichnet dadurch, dass** er weiter umfasst
- einen Durchflussmesser (20), der mit zumindest einem von dem besagten Flüssigkeitseinlasses (14) und dem besagten Flüssigkeitsauslass (16) verbunden ist und dazu konfiguriert ist, um Durchflussdaten zu erhalten; und
- einer Kommunikationseinheit (50), die mit dem Durchflussmesser (20) verbunden und dazu konfiguriert ist, einem Controller (CC) Daten hinsichtlich des Betriebs des Tropfenbewässerers bereitzustellen, wobei die besagten Daten zumindest die Durchflussdaten umfassen.

2. Ein Tropfenbewässerer (10) gemäß Anspruch 1, wobei der Durchflussmesser zum Messen einer Durchflussrate und/oder einer Menge an Bewässerungsflüssigkeit konfiguriert ist, die individuell den besagten Tropfenbewässerer durchlaufen hat.

3. Ein Tropfenbewässerer (10) gemäß Anspruch 1 oder 2, wobei der Durchflussmesser (20) zum Bereitstellen eines Ausgangssignals, das die Durchflussdaten trägt, und zum Bereitstellen des besagten Ausgangssignals gegenüber der Kommunikationseinheit (50) konfiguriert ist.

4. Ein Tropfenbewässerer (10) gemäß Anspruch 1 oder 2, wobei die Kommunikationseinheit (50) ein Teil eines lokalen Steuermoduls (CM) bildet, wobei das besagte lokale Steuermodul (CM) für eine Fernverbindung konfiguriert ist.

5. Ein Tropfenbewässerer (10) gemäß Anspruch 4, wobei die besagte Fernverbindung ausgewählt ist aus drahtloser Kommunikation, physischer drahtgebundener Kommunikation und IR-Kommunikation mit einer Mehrzahl von Tropfenbewässerern und einer Sensieranordnung.

6. Ein Tropfenbewässerer (10) gemäß einem der Ansprüche 1 bis 5, wobei die Kommunikationseinheit (50) auch dazu konfiguriert ist, um Betriebsdaten hinsichtlich des Betriebszustandes des Tropfenbewässerers selbst von einer Quelle verschieden von dem Durchflussmesser (20) zu erhalten und die besagten Betriebsdaten an den Controller auszugeben, wobei die besagten Betriebsdaten zumindest eines des Folgenden umfassen: Verifikation hinsichtlich des Betriebs des Tropfenbewässerers, Daten hinsichtlich Lecks, Trockenheit, Betrieb einer Regelungsvorrichtung des Tropfenbewässerers und Fehlfunktion.

7. Ein Tropfenbewässerer (10) gemäß einem der Ansprüche 1 bis 6, wobei der Tropfenbewässerer eine Regelungsvorrichtung (30) umfasst, die mit einem Flüssigkeitsweg zwischen dem Flüssigkeitseinlass (14) und dem Flüssigkeitsauslass (16) verbunden ist, und die dazu konfiguriert ist, einen Fluss der besagten Bewässerungsflüssigkeit darin zu regeln.

8. Ein Tropfenbewässerer (10) gemäß Anspruch 7, wobei der Tropfenbewässerer eine Steuereinheit (40) umfasst, die auch ein Teil eines lokalen Steuermoduls (CM) bildet, und die mit der Regelungsvorrichtung (30) verbunden und dazu konfiguriert ist, zumindest ein Steuersignal zu der Regelungsvorrichtung (30) zu transferieren, um sie zu betreiben.

9. Ein Tropfenbewässerer (10) gemäß Anspruch 8, wobei der Controller (CC) dazu konfiguriert ist, ein Steuersignal zu der Steuereinheit (40) des lokalen Steuermoduls (CM) mit Anweisungen zum Regeln des Betriebs des Tropfenbewässerers basierend auf den Betriebsdaten, die von der Kommunikationseinheit (50) des lokalen Steuermoduls (CM) bereitstellt werden, auszugeben.

10. Ein Tropfenbewässerer (10) gemäß Anspruch 9, wobei die Steuereinheit (40) dazu konfiguriert ist, die Regelungsvorrichtung (30) zu steuern, um zumindest eines des Folgenden auszuführen: Starten des Betriebs, Reduzieren/Erhöhen der Durchflussrate, Abschalten des Betriebs des gesteuerten Tropfenbewässerers und Ausgeben eines Alarms an einen Nutzer des Systems.

11. Ein Tropfenbewässerungssystem umfassend:
- eine Mehrzahl von individuell gesteuerten Tropfenbewässerern (10) gemäß einem der Ansprüche 1 bis 10; und
- einen Controller (CC), der mit der Mehrzahl der besagten Tropfenbewässerer (10) verbunden und dazu konfiguriert ist, individuell jeden der besagten Mehrzahl von Tropfenbewässerern (10) über entsprechende lokale Steuermodule (CM) der besagten Tropfenbewässerer (10) zu steuern, um vorbestimmte Bewässerungsanforderungen zu erfüllen.

12. Ein Tropfenbewässerungssystem gemäß Anspruch 11, wobei der Controller (CC) dazu konfiguriert ist, den Druck innerhalb von jedem der Tropfenbewässerer (10) durch Erhöhen/Verringern des Flüssigkeitsdurchflusses durch die anderen Tropfenbewässerer (10) zu steuern.

13. Ein Tropfenbewässerungssystem gemäß Anspruch 11 oder 12, wobei die lokalen Steuermodule (CM) von verschiedenen Tropfenbewässerern (10) miteinander verbunden sind, um untereinander Daten zu transferieren/empfangen.

14. Ein Tropfenbewässerungssystem gemäß Anspruch 13, wobei die lokalen Steuermodule (CM) miteinander in einer verketteten-Liste-Konfiguration verbunden sind, in der jedes lokale Steuermodul mit seinen benachbarten vorgeschalteten und nachgeschalteten lokalen Steuermodulen verbunden ist.

## Revendications

1. Dispositif d'irrigation au goutte-à-goutte (10) apte à communiquer, comprenant :
- un logement (12) réalisé avec une entrée pour fluide (14) destinée à la réception d'un fluide d'irrigation et avec une sortie pour fluide (16) destinée à l'évacuation dudit fluide d'irrigation ;
**caractérisé en ce qu'**il comprend en outre :
- un débitmètre (20) associé à au moins un élément choisi parmi ladite entrée pour fluide (14) et ladite sortie pour fluide (16), configuré pour obtenir des données d'écoulement ; et
- une unité de communication (50) associée au débitmètre (20) et configurée pour procurer à un contrôleur (CC) des données concernant le fonctionnement du dispositif d'irrigation au goutte-à-goutte, lesdites données englobant au moins les données d'écoulement.

2. Dispositif d'irrigation au goutte-à-goutte (10) selon la revendication 1, dans lequel le débitmètre est configuré pour mesurer le débit d'écoulement et/ou la quantité de fluide d'irrigation qui est passée de manière individuelle à travers ledit dispositif d'irrigation au goutte-à-goutte.

3. Dispositif d'irrigation au goutte-à-goutte (10) selon la revendication 1 ou 2, dans lequel le débitmètre (20) est configuré pour procurer un signal de sortie transportant des données d'écoulement et pour fournir ledit signal de sortie à l'unité de communication (50).

4. Dispositif d'irrigation au goutte-à-goutte (10) selon la revendication 1 ou 2, dans lequel l'unité de communication (50) représente une partie constituante d'un module de commande local (CM), ledit module de commande local (CM) étant configuré pour un raccordement à distance.

5. Dispositif d'irrigation au goutte-à-goutte (10) selon la revendication 4, dans lequel ledit raccordement à distance est choisi parmi une communication sans fil, une communication physique par câble et une communication par infrarouge avec un certain nombre de dispositifs d'irrigation au goutte-à-goutte et de systèmes de détection.

6. Dispositif d'irrigation au goutte-à-goutte (10) selon l'une quelconque des revendications 1 à 5, dans lequel l'unité de communication (50) est également configurée pour obtenir des données opérationnelles concernant l'état opérationnel du dispositif d'irrigation au goutte-à-goutte lui-même à partir d'une source autre que le débitmètre (20) et pour envoyer lesdites données opérationnelles au contrôleur, lesdites données opérationnelles englobantes au moins une des données choisies parmi les suivantes : une vérification concernant le fonctionnement du dispositif d'irrigation au goutte-à-goutte, des données concernant des fuites, la siccité, le fonctionnement d'un mécanisme de régulation du dispositif d'irrigation au goutte-à-goutte et un dysfonctionnement.

7. Dispositif d'irrigation au goutte-à-goutte (10) selon l'une quelconque des revendications 1 à 6, dans lequel le dispositif d'irrigation au goutte-à-goutte comprend un mécanisme de régulation (30) associé à une voie de fluide entre l'entrée pour fluide (14) et la sortie pour fluide (16) et configuré pour y réguler l'écoulement dudit fluide d'irrigation.

8. Dispositif d'irrigation au goutte-à-goutte (10) selon la revendication 7, dans lequel le dispositif d'irrigation au goutte-à-goutte comprend une unité de commande (40) représentant également un élément constitutif d'un module de commande local (CM) et associée au mécanisme de régulation (30) et configurée au moins pour transférer un signal de commande au mécanisme de régulation (30) dans le but d'activer ce dernier.

9. Dispositif d'irrigation au goutte-à-goutte (10) selon la revendication 8, dans lequel le dispositif de commande (CC) est configuré pour envoyer un signal de commande à l'unité de commande (40) du module de commande local (CM) avec des instructions pour la régulation de l'exploitation du dispositif d'irrigation au goutte-à-goutte (10) en se basant sur les données opérationnelles fournies par l'unité de communication (50) du module de commande local (CM).

10. Dispositif d'irrigation au goutte-à-goutte (10) selon la revendication 9, dans lequel l'unité de commande (40) est configurée pour la commande du mécanisme de régulation (30) dans le but de mettre en oeuvre au moins une des opérations suivantes : une opération d'amorçage, une réduction/augmentation du débit, une opération d'arrêt du dispositif d'irrigation au goutte-à-goutte commandé et l'envoi d'une alerte à un utilisateur du système.

11. Système d'irrigation comprenant :
- plusieurs dispositifs d'irrigation au goutte-à-goutte (10) commandés de manière individuelle selon l'une quelconque des revendications 1 à 10 ; et
- un contrôleur (CC) associé auxdits plusieurs dispositifs d'irrigation au goutte-à-goutte (10) et configuré pour la commande individuelle de chacun desdits plusieurs dispositifs d'irrigation au goutte-à-goutte via des modules de commande locaux correspondants (CM) desdits dispositifs d'irrigation au goutte-à-goutte (10) dans le but de répondre à des exigences d'irrigation prédéterminées.

12. Système d'irrigation selon la revendication 11, dans lequel le contrôleur (CC) est configuré pour le réglage de la pression régnant au sein des dispositifs d'irrigation au goutte-à-goutte (10) par le fait d'augmenter/de diminuer l'écoulement de fluide à travers les autres dispositifs d'irrigation au goutte-à-goutte (10).

13. Système d'irrigation selon la revendication 11 ou 12, dans lequel les modules de commande locaux (CM) de différents dispositifs d'irrigation au goutte-à-goutte (10) sont associés les uns aux autres pour l'émission/la réception de données entre eux.

14. Système d'irrigation selon la revendication 13, dans lequel les modules de commande locaux (CM) sont associés les uns aux autres dans une configuration de liste enchaînée, dans lequel chaque module de commande local est associé à ses modules de commande locaux voisins en amont et en aval.
